# EUROPÄISCHE PATENTSCHRIFT

(11) **EP 0 405 202 B1**
(45) Veröffentlichungstag und Bekanntmachung des Hinweises auf die Patenterteilung: **23.03.1994**
(21) Anmeldenummer: 90110863.9
(22) Anmeldetag: 08.06.1990
(51) Int. Cl.: B29C 67/00, B29C 43/00, B22F 3/08

(54) **Verfahren zur Herstellung von Gegenständen aus Kunststoff**
Method of manufacturing plastic articles
Procédé pour la fabrication d'articles en matière plastique

(30) Priorität: 27.06.1989 DE 3921046
(43) Veröffentlichungstag der Anmeldung: 02.01.1991
(73) Patentinhaber: Linde Aktiengesellschaft, 65189 Wiesbaden (DE)
(72) Erfinder: Rebhan, Dieter, Dipl.-Ing., D-8192 Geretsried-Gelting (DE)
(74) Vertreter: Schaefer, Gerhard, Dr.

(56) Entgegenhaltungen:
- DE-A- 1 604 522
- DE-A- 1 758 991
- GB-A- 1 155 708
- US-A- 3 165 404
- WERKTUIGBOUW Bd. 35, Nr. 2, Februar 1980, DEN HAAG 'Vervormen met hoge snelheden'
- PATENT ABSTRACTS OF JAPAN vol. 9, no. 245 (M-418)(1968) 2. Oktober 1985& JP-A-60 97 813 (KOGYO GIJUTSUIN) 31. Mai 1985

## Beschreibung

Die Erfindung betrifft ein Verfahren zur Herstellung von Gegenständen aus Kunststoff, bei dem von zerkleinertem Kunststoffmaterial, insbesondere auch von Recyclingmaterial aus verschiedenen Kunststoffarten, ausgegangen wird.

Es sind eine Vielzahl von Verfahren zur Herstellung von Kunststoffgegenständen bekannt. Ein Verfahrensprinzip besteht beispielsweise darin, daß Kunststoffrohmaterial auf seine Erweichungstemperatur gebracht wird und dann seine Formgebung erfolgt. Bekannte Methoden diesbezüglich sind Gieß-, Preß-und Blasverfahren. Ein weiteres Verfahrensprinzip beruht auf der chemischen Reaktion von mehreren Ausgangsprodukten, nach deren Zusammenbringen der eigentliche Kunststoff erst entsteht und dessen Formung auch in dieser Phase erfolgen kann, z.B. das Schäumen. Darüber hinaus ist auch die Anwendung von Binde- oder Klebemitteln auf granulatartiges Ausgangsmaterial in Verbindung mit einer gestaltgebenden Form bereits bekannt.

Alle diese Methoden und Verfahren besitzen Vor- und Nachteile, wobei jedoch ein gemeinsamer Nachteil all dieser Verfahren darin besteht, daß sie sich entweder nur für die Anwendung auf ein einheitliches Ausgangsmaterial eignen oder Binde- oder Klebemittel erforderlich sind, um eine Grundfestigkeit zu erreichen. Speziell die Verarbeitung von gemischten Ausgangsmaterialien ist also mit besonderen technischen Schwierigkeiten und Kosten verbunden. Es besteht deshalb durchaus der Bedarf, weitere Möglichkeiten zur Herstellung von Gegenständen aus Kunststoff zu suchen.

Deshalb besteht die Aufgabenstellung der vorliegenden Erfindung darin, ein Herstellungsverfahren für Kunststoffgegenstände anzugeben, das sich insbesondere auch für die Verarbeitung von gemischtem Ausgangsmaterial, insbesondere auch Recyclingmaterial, eignet.

Gemäß der Erfindung wird ein Herstellungsverfahren für Kunststoffartikel vorgeschlagen, bei dem zerkleinertes Kunststoffmaterial in eine dem zu erzeugenden Gegenstand entsprechende Form eingebracht und diese Form geschlossen wird und bei dem in dieser geschlossenen, gefüllten Form eine explosive Brenngas/Sauerstoffgas-Mischung erzeugt wird und eine Zündung dieses Gasgemisches erfolgt, wobei die Entwicklung des Drucks und der Temperatur so beeinflußt wird, daß optimale Herstellbedingungen in der Form entstehen.

Durch das erfindungsgemäße Verfahren entsteht ein entsprechend der verwendeten Form gestalteter Kunststoffgegenstand, denn durch die in der Form ausgelöste, "dosierte" Explosion, werden die Kanten und Außenflächen der darin befindlichen Kunststoffkörner angeschmolzen und an den gegenseitigen Berührungspunkten verbacken, so daß ein stabiler, nach einer gewissen Abkühlzeit entformbarer Kunststoffgegenstand entsteht.

In einer vorteilhaften Ausgestaltung wird eine Druck- und Temperaturbeeinflussung in der Form in Gestalt eines bei Überdruck aus lösenden, mit dem Innenraum der Form verbundenen Ventils vorgesehen. Diese Ausgestaltung ist ebenso einfach wie wirksam.

Bei der Ausgestaltung des erfindungsgemäßen Verfahrens kann als Brenngas Wasserstoff, Erdgas, Propan, Acetylen und ähnliches eingesetzt werden. Als Sauerstoffgas können reiner Sauerstoff oder Sauerstoff/Luft-Mischungen angewendet werden. Je nach Art, Menge und Zusammensetzung des zu verarbeitenden Kunststoffmaterials ist daraus eine, in der Regel sogar mehrere, Brenngas/Sauerstoffgas-Mischung wählbar.

Anhand der schematischen Zeichnung soll das erfindungsgemäße Verfahren beispielhaft näher erläutert werden.

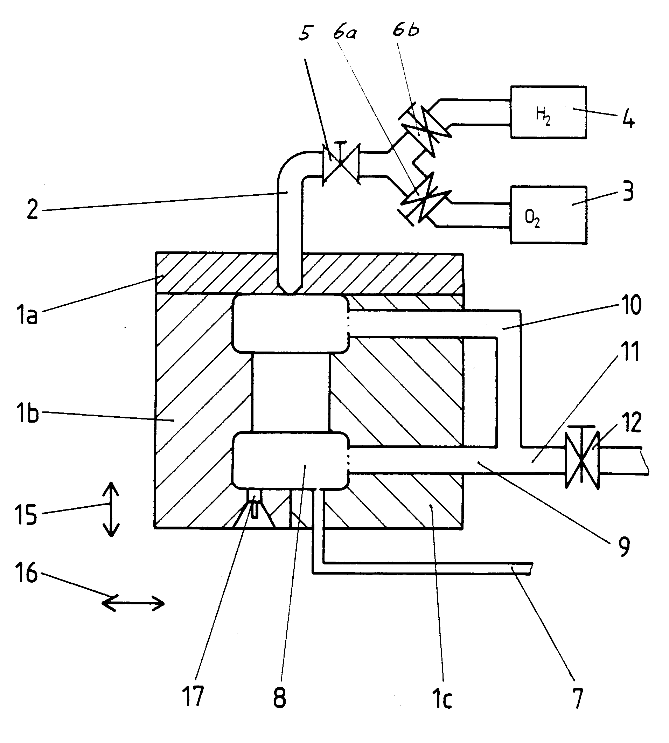

Die Figur zeigt schematisch eine Einrichtung zur Durchführung des erfindungsgemäßen Verfahrens im Schnitt. Eine aus drei Teilen (1a, 1b, 1c) bestehende Form 1 ist über eine Leitung 2 mit den Prozeßgasen, beispielsweise Wasserstoff und Sauerstoff, versorgbar. Da mit der Zuleitung 2 die beiden Gasquellen 3,4 über ein Ventil 5 und Dosierventile 6a,b mit der Form 1 verbunden sind, erfolgt die Vermischung der beiden Prozeßgase bereits außerhalb der Form. An den mit zerkleinertem Kunststoffmaterial zu füllenden Hohlraum 8 der Form 1 sind Abzugsleitungen 9,10 angeschlossen, in deren gemeinsamer Fortsetzungsleitung 11 ein einstellbares Überdruckventil 12 angeordnet ist.

Der Ablauf des erfindungsgemäßen Verfahrens ist wie folgt: Die geöffnete Form 1 wird zunächst teilweise geschlossen, d.h. die Teile 1b und 1c der Form werden entsprechend Pfeil 16 aneinandergefahren und es wird zerkleinertes, granuliertes Kunststoffmaterial eingefüllt, bis die Form vollständig ausgefüllt ist. Beim einzufüllenden Material kann es sich auch um ein Gemisch aus verschiedenen Kunststoffarten und insbesondere auch um Material von zerkleinerten Abfall-Kunststoffteilen handeln. Danach wird die Form entsprechend Pfeil 15 durch Heranfahren der Teile 1b und 1c an das Kopfteil 1a vollständig geschlossen und die Zufuhr der Prozeßgase über Ventil 5 geöffnet, wobei über die Dosierventile 6a,b das Mengenverhältnis der Prozeßgase einstellbar ist. Die Prozeßgase werden in etwa stöchiometrischem Verhältnis, also etwa 2 Teile zu 1 Teil Sauerstoff eingestellt. Die Zufuhr des Brenngases und des Sauerstoffgases erfolgt solange, bis sich überall in der Form die eingestellte, explosive Gasmischung verteilt hat. Dies ist etwa nach der Zufuhr des 0,5- bis 2-fachen Volumens des Formhohlraumes 8 erreicht, wobei der Abfluß von Gas vorteilhafterweise über eine strömungsmäßig am anderen Ende des Hohlraums 8 in Bezug zur Zuleitung 2 liegende Abflußleitung 7 erfolgen sollte.

Das jetzt in den Hohlraum 8 eingeführte und in den Frei- und zwischenräumen zwischen dem Kunststoffgranulat befindliche explosive Gasgemisch wird mit Hilfe einer Zündeinrichtung 17, z.B. einer Zündkerze, gezündet. Die dadurch initiierte Reaktion setzt sich durch den gesamten Kunststoffkörper fort, wobei durch die Abzugsleitungen 9,10 im Formteil 1c und dem zugehörigen Überdruckventil 12 der Aufbau eines unerwünscht hohen Druckes verhindert wird. Der einzustellende Grenzdruck ist dabei insbesondere vom eingesetzten Ausgangsmaterial abhängig und beträgt etwa 12 bar. Ebenso wird durch diesen bei jedem Herstellungsablauf auftretenden Abzug von "Explosionsgasen" der Aufbau einer zu hohen Temperatur in der Form verhindert, daß Wärme mit den austretenden Überdruckgasen abgeführt wird. Das Funktionieren des vorgeschlagenen Verfahrens ohne Zerstörung des Kunststoffs beruht neben des jetzt beschriebenen Maßnahmen wahrscheinlich auch auf der kleinmengigen Verteilung des explosiven Gasgemisches zwischen dem zerkleinerten Kunststoffkorngut, wobei dies letztlich auch gerade für das Verbacken der Kunststoffpartikel entscheidend ist.

Es hat sich also gezeigt, daß sich auf diese Weise mit einer zunächst für Kunststoff zu "massiv" erscheinenden Methode Artikel mit nicht zu feingliedriger Struktur herstellen lassen, wobei deren Eigenschaften für vielerlei Zwecke jedenfalls ausreichend sind.

Somit liefert das erfindungsgemäße Verfahren eine weitere Möglichkeit, Gegenstände aus Kunststoff herzustellen, wobei insbesondere auf die hohe Flexibilität in Hinblick auf die einzusetzenden Materialien und Materialgemische hinzuweisen ist.

## Patentansprüche

1. Verfahren zur Herstellung von Gegenständen aus Kunststoff, bei dem von zerkleinertem Kunststoffmaterial, insbesondere auch von Recyclingmaterial aus verschiedenen Kunststoffarten, ausgegangen wird, dadurch gekennzeichnet, daß das zerkleinerte Kunststoffmaterial in eine dem zu erzeugenden Gegenstand entsprechende Form eingebracht und diese Form geschlossen wird und daß in der geschlossenen, gefüllten Form eine explosive Brenngas/Sauerstoffgas-Mischung erzeugt wird und eine Zündung dieser Mischung erfolgt, wobei die Entwicklung des Drucks und der Temperatur so beeinflußt wird, daß günstige Bedingungen für das zu erzeugende Produkt in der Form entstehen.

2. Verfahren nach Anspruch 1, dadurch gekennzeichnet, daß eine Druck- und Temperaturbeeinf lussung in der Form in Gestalt eines bei Überdruck aus lösenden, mit dem Innenraum der Form verbundenen Ventils vorgesehen wird.

3. Verfahren nach Anspruch 1 oder 2, dadurch gekennzeichnet, daß als Brenngas Acetylen, Wasserstoff, Erdgas, Propan oder andere Brenngase und als Komponente Sauerstoff oder Luft verwendet werden, die vorzugsweise in verschiedenen Mischungen Anwendungen finden, je nach Art, Größe und Zusammensetzung des Kunststoffmaterials.

## Claims

1. Method for the production of objects made of plastic, starting from comminuted plastic material, in particular recycling material composed of various types of plastic, characterised in that the comminuted plastic material is introduced into a mould corresponding to the object to be produced and this mould is closed and in that an explosive combustible gas/oxygen gas mixture is produced in the closed filled mould and this mixture is ignited, the development of the pressure and the temperature being influenced so that favourable conditions for the product to be produced occur in the mould.

2. Method according to claim 1, characterised in that a pressure and temperature-influencing means is provided in the mould in the form of a valve which is connected to the interior of the mould and trips when exposed to excess pressure.

3. Method according to claim 1 or 2, characterised in that acetylene, hydrogen, natural gas, propane or other combustible gases are used as combustible gas and oxygen or air as constituent which are preferably employed in various mixtures according to the nature, size and composition of the plastic material.

## Revendications

1. Procédé de fabrication d'articles en matière plastique à partir de matériau plastique broyé, en particulier également à partir de matériau de recyclage en diverses sortes de plastiques, caractérisé en ce que le matériau plastique broyé est placé dans un moule présentant une forme correspondant à l'article à obtenir, puis le moule est fermé, et en ce que, dans le moule fermé et rempli, on génère un mélange explosif gaz combustible/gaz comburant, et on provoque l'allumage de ce mélange, de sorte que la pression et la température se développent et subissent une influence telle que des conditions favorables pour l'obtention de l'article règnent dans le moule.

2. Procédé selon la revendication 1, caractérisé en ce qu'une influence de la pression et de la température dans le moule est prévue sous la forme d'une valve reliée à l'espace intérieur du moule et se déclenchant en cas de surpression.

3. Procédé selon la revendication 1 ou 2, caractérisé en ce que l'on utilise comme gaz de combustion de l'acétylène, de l'hydrogène, du gaz naturel, du propane ou d'autres combustibles et comme comburant, de l'oxygène ou de l'air, qui sont utilsés de préférence dans différents mélanges selon le genre, la taille et la composition du matériau plastique.
